# NEW EUROPEAN PATENT SPECIFICATION

(11) **EP 0 600 646 B2**
(45) Date of publication and mention of the opposition decision: **28.04.2004**
(45) Mention of the grant of the patent: 20.09.2000
(21) Application number: 93309236.3
(22) Date of filing: 19.11.1993
(51) Int. Cl.: G07F 7/12, G07D 7/00, H04N 1/44

(54) **Method and apparatus for producing and authenticating a secure document**
Verfahren und Vorrichtung zum Herstellen eines gesicherten Dokuments und zum Überprüfen seiner Echtheit
Procédé et dispositif pour produire et authentifier un document sécurisé

(30) Priority: 20.11.1992 US 979116
(43) Date of publication of application: 08.06.1994
(73) Proprietor: PITNEY BOWES INC., Stamford Connecticut 06926-0700 (US)
(72) Inventor: Berson, William, Westport, Connecticut 06880 (US)
(74) Representative: Frank, Veit Peter, Dipl.-Ing.

(56) References cited:
- EP-A- 0 286 378
- EP-A- 0 317 229
- EP-A- 0 334 616
- WO-A-92/03804
- US-A- 4 663 622
- US-A- 4 893 338
- US-A- 4 949 381
- US-A- 4 993 068
- US-A- 5 095 195
- US-A- 5 157 726
- US-A- 5 159 635
- US-A- 5 241 600
- IBM Tecnical Disclosure Bulletin, April 1978, "Facsimile with encrypted hardcopy", vol 20, nr. 118, pages 4994-4995

## Description

The subject invention relates to a document or similar item. More particularly, it relates to a document or similar item which has a high degree of security against tampering, and to methods and apparatus for producing and authenticating such documents.

EP-A-0 286 378 describes authenticating methods and systems in which the authenticity of a paper document is tested by sensing its transparency and comparing the sequence of representations produced, with a sequence of reference representations read from a record of an earlier-made sensing written on the document in an offset-printed (and therefore nonuniform) magnetic stripe. The reference sequence is written on the stripe (18) in the form of an encrypted identifier within a bit string that is interspersed with framing characters and includes a public encryption key and an error-correction code.

EP-A-0 334 616 describes a method and system for personal identification utilizing a private key of a public-key cryptosystem key pair to encrypt a non-secret password into a digital signature. The password and the digital signature are then encoded and stored on a magnetic stripe or other memory device of a card for use at the transaction terminal. To effect a transaction, the digital signature on a received card must be shown to have been generated from the password on the received card. The password preferably includes a digitized photograph of the authorised cardholder which is capable of being displayed at the transaction terminal. This enables the operator of the terminal to verify the identity of the cardholder by visual inspection.

EP-A-0 331 352 describes a method of franking mail items in which the franking impression includes a machine readable portion and a visually readable portion. The machine readable portion comprises a data block including at least a postage charge and a pseudo-random number and the data block is encrypted prior to printing. During printing of the franking impression, at least a part of the machine readable portion is read and compared with the data block intended to be printed. If the comparison is satisfactory the printing operation is continued to print the visually readable portion. The pseudo-random number is changed for each franking transaction which may be each item or batch of items. The machine readable portion is read at a mail handling centre to provide an input to a postage charging and accounting function.

EP-A-0 154 972 describes a method and apparatus for verifying postage, in which an indicium having an encrypted mark is stamped upon a mail piece to represent postage so as to provide a code for authentication of such postage. When there is a question as to the validity of the postage on the mail piece, a postal official inputs into a decoder the postage amount, the serial number, the date, and the piece count for the mail piece in any convenient manner. The decoder performs an encryption algorithm for determining the valid encryption mark based upon the information supplied to it. After processing the input information, the valid mark would be supplied to the postal official, as for example, on a display. If the mark generated by the decoder corresponds to the number following the piece count on the mail piece, the operator knows the postage thereon is genuine. If there is no such match, then the postal official is aware of wrongdoing and can take appropriate action.

U.S. patent no. 4,853,961; for: "Reliable Document Authentication System"; to: Pastor; issued: August 1, 1989, discloses a system wherein a document is authenticated by encryption using a public key encryption system. The invention of the Pastor patent teaches authentication of a document by encryption of information derived from the document, incorporating that encrypted information into the document, recovering the encrypted information from the document and decrypting it, and comparing it to the information as originally included in the document.

While believed to be generally very effective for authenticating documents to detect alteration or tampering, the above described invention suffers from certain disadvantages with existing documents, or documents which are produced to an already defined format. For existing documents it is necessary to input information from the document to create the encrypted information. Typically, this would be done either by manual keyboard input or by some form of character recognition technology. Also, where documents are produced in large numbers to already defined format, e.g. driver's licenses, it is difficult to modify the format to provide for incorporation of the encrypted information in accordance with the Pastor patent.

The above disadvantages of the prior art are overcome in accordance with the subject invention by means of a method and apparatus for producing a secure document and for authenticating that document.

Thus, in a first aspect the present invention provides apparatus for producing a secure document, including a scanner for scanning a document for producing a first signal representative of an image of the document. The apparatus further includes an encrypter for encrypting a second signal, which is derived, at least in part, from the first signal, and which includes a representation of the image; and a coder for incorporating a coded representation of the encryption of the second signal onto a label to be affixed to the document as a printed code.

(As used herein the term "label" preferably describes a conventional label such as an address label. However, it is within the contemplation of the subject invention, and as used herein the term "label" means, any object which may incorporate the coded representation and which can be affixed or otherwise permanently associated with the document.)

In accordance with a second aspect of the present invention, there is provided a method of producing a secure document in which the document to be secured is scanned to produce the first signal. The second signal, which is derived at least in part from the first signal, and which includes a representation of the image is encrypted and coded and incorporated in the label to be affixed to the document as a printed code.

Once produced, the document may then be authenticated. In a third aspect, therefore, the present invention provides a method of producing and authenticating a secure document comprising the steps of: scanning said document to produce a first signal representative of an image of at least a portion of said document; encrypting a second signal, comprising a representation of said image, said second signal being derived at least in part from said first signal; incorporating a coded representation of said encrypted second signal into a label as a printed code and affixing the label to said document; reading said coded representation of said second signal from said document; decoding said second signal; decrypting said decoded second signal; inputting said decrypted second signal to a display to display said representation of said image; and comparing said document to said displayed image to authenticate said document.

Thus, it is an advantage of the subject invention to provide a method and apparatus for producing a secure document, which are easily applied to existing documents or documents produced in a predefined format.

In accordance with one embodiment of the subject invention the first signal is converted into a digital signal for processing.

In accordance with another embodiment of the subject invention the second signal includes a compressed form of the first signal.

(Signal compression is well known to those skilled in the art and, in the case of digital signals, involves the application of a predetermined algorithm to a signal to reduce the number of bytes which must be transmitted or processed, while still retaining substantially all of the information represented by the signal.)

In accordance with another embodiment of the subject invention the second signal is encrypted using an encryption key Eᵢ, for a public key encryption system.

In accordance with still another embodiment of the subject invention a decryption key, Dᵢ which correspondences to the key, Eᵢ, is encrypted with a second encryption key, E₁, for the public key encryption system, and the resulting encrypted decryption key E₁[Di], is appended to the encrypted second signal prior to incorporation of the second signal into the second portion of the document.

In accordance with still another embodiment of the subject invention the coded representation of the encrypted second signal is printed on a label as a two-dimensional barcode and said label is affixed to said document.

In accordance with yet still another embodiment, the apparatus for authenticating the document card stores a decryption key D₁, corresponding to key E₁ and the decryption of the encrypted second signal includes the step of decrypting the encrypted key, E₁ [Dᵢ]/ using the decryption key, D₁, to obtain the decryption key Dᵢ, which may then be used to decrypt the encrypted second signal.

Thus, it can be seen that the subject invention achieves the above stated advantages by providing a method and apparatus for producing a secure document which includes an image which may be easily compared to document, and which is highly resistant to tampering. Other advantages of the subject invention will be readily apparent to those skilled in the art from consideration of the attached drawings and the detailed description of a preferred, exemplary embodiment set forth below.

In the drawings:
Figure 1 is a schematic block diagram of an apparatus for producing a secure document in accordance with the subject invention.
Figure 2 is a schematic block diagram of an apparatus for authenticating a secure document produced in accordance with the subject invention.

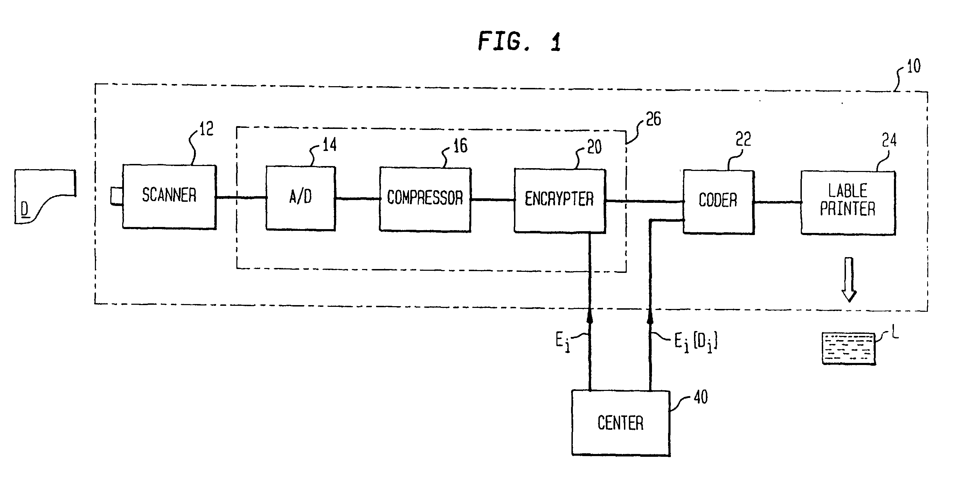

Figure 1 shows a schematic block diagram of apparatus 10 for producing a label L. A document for which the label is intended is scanned by a conventional video scanner 12 to produce a first signal representative of that document D's image. Preferably, the first signal is then converted to a digital form by an analog-to-digital convertor 14 for processing in the digital domain. It is however within the contemplation of the subject invention that at least the signal compression and encryption techniques to be described below may be carried out in the analog domain using signal compression and scrambling technologies well known to those in the analog signal processing arts.

In one embodiment of the subject invention, scanning and compression are done using well known Group III facsimile technology, though other suitable scanning and compression methods are within the contemplation of the subject invention.

The first signal is then input to a compression module 16 where it is compressed to reduce the amount of data which must be stored on label L.

It should be noted that where label L is to have substantially the same form as an address label or the like, data compression is, at the present state of technology, necessary. However, it is within the contemplation of the subject invention that the first signal may not require compression but that the full signal may be processed as will be described further below.

Data compression algorithms, for compression of image signals, are known to those skilled in the art. Preferably scanning and signal compression are carried out in accordance with the well known standard for Group III facsimile transmission. Further description of the operation of compressor 16 is not believed necessary to an understanding of the subject invention.

The compressed first signal is then input to an encrypter 20 to be included in the encrypted second signal which will be incorporated into label L as will be described further below. Preferably encrypter 20 encrypts the second signal using an encryption key, Eᵢ, for a public key encryption system such as the well known RSA system.

The encrypted second signal is then encoded in accordance with some predetermined format by coder module 22, which controls code generator 24 to incorporate the encoded encrypted second signal in a portion of document.

In accordance with a preferred embodiment of the subject invention, the coded signal is coded as a two dimensional barcode, such as the PDF-417 standard barcode, developed by the Symbol Technology Corporation of New York. However, the encrypted second signal may be coded into any suitable format.

In the preferred embodiment where the coded second signal is represented as a two-dimensional barcode, the barcode will be printed an label L.

In a preferred embodiment of the subject invention compressor module 16, encrypter module 20, and coder module 22 are implemented as software modules in microprocessor 26: which is preferably, an Intel model 80386, or the like, or other microprocessors of greater capacity.

In a preferred embodiment of the subject invention a center 40 transmits encryption code Eᵢ to encrypter module 20. In order to increase the security of label L key Eᵢ may be changed from time to time. For the highest level of security key Eᵢ may be changed for each document D produced, or a different key may even be used to encrypt different portions of the second signal.

To facilitate decryption of the second signal in an environment where key Eᵢ is frequently changed center 40 also transmits an encrypted decryption key E₁[Dᵢ] to be appended to the encrypted second signal by coder module 22. Thus, as will be seen below, when document D is to be authenticated the necessary decryption key Dᵢ can be obtained by decrypting E₁[Dᵢ].

Typically, encryption/decryption pair E₁, D₁ will remain substantially constant during operation of system 10. However, in applications where system 10 is used to produce labels L for various organizations different pairs E₁ D₁ may be used for different organizations.

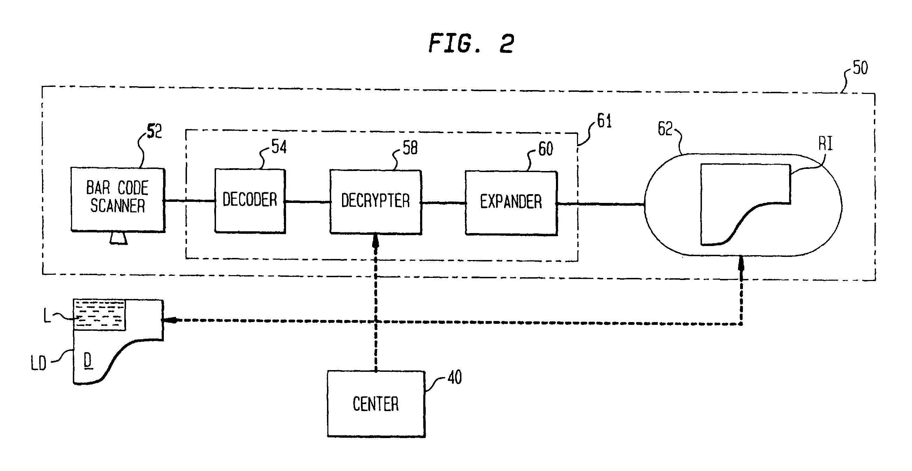

Turning now to Figure 2 apparatus 50 for authenticating a labeled document LD, having label L affixed is shown. The label L of document D is scanned by a barcode scanner 52 having the capability to scan an appropriate two-dimensional barcode. The scanned signal is then decoded by decoder module 54 and decrypted by decrypter module 58. In a preferred embodiment of the subject invention decrypter 58 stores decryption key D₁ which is used to decrypt encrypted key E₁[Dᵢ] to obtain decryption key Dᵢ. Key Dᵢ is then used to decrypt-the decoded signal scanned from label L.

Key D₁ is obtained by decrypter 58 from center 40. Typically, D₁ will remain constant during operation of system 50, as described above, and a direct communication link between system 50 and center 40 is not necessary and key Dₗ may be transmitted in any convenient manner. However, for example, in one application, where label L has a predetermined expiration date it may be desirable to change key D₁ after the expiration date and if such expiration dates occur sufficiently often a direct communication link to center 40 may be included in system 50.

The decrypted scan signal is then expanded in by an algorithm complimentary to the compression algorithm used in system 10, in a conventional manner which need not be described further for an understanding of the subject invention.

In a preferred embodiment of the subject invention decoder module 54, decrypter module 58, and expander module 60 may be implemented as software modules in a microprocessor 61.

The decrypted, expanded signal is then displayed by a conventional display 62. The display includes a representation RI of the image of document D. To authenticate labeled document LD it is compared with representation RI. It should be noted that with compression representation RI will be somewhat degraded. It has been found however that using the above described Group III facsimile standard a sufficiently accurate representation of an image of 216 mm x 279 mm (8½ x 11 inches) size text document may be coded as approximately 2,000 bytes of data and printed using the above described PDF-417 two-dimensional barcode in an area of approximately 89 mm x 64 mm (3.5 by 2.5 inches).

The preferred embodiments described above have been given by way of example only, and other embodiments of the subject invention will be apparent to those skilled in the art from consideration of the detailed descriptions set forth above and the attached drawings. Accordingly, limitations on the subject invention are to be found only in the claims set forth below.

## Claims

1. A method of producing a secure document comprising the steps of:
a) scanning said document to produce a first signal representative of an image of said document;
b) encrypting a second signal, comprising a representation of said image, said second signal being derived at least in part from said first signal; and
c) incorporating a coded representation of said encrypted second signal in a label to be affixed to said document as a printed code.

2. A method as claimed in claim 1, wherein said second signal comprises a compressed form of said first signal.

3. A method as claimed in claim 1 or claim 2, wherein said second signal is encrypted using an encryption key, Eᵢ for a public key encryption system.

4. Apparatus for producing a secure document, comprising:
(a) a scanner (12) for scanning a document for producing a first signal representative of an image of the document;
(b) an encrypter (20) for encrypting a second signal derived, at least in part, from the first signal and including a representation of the image; and
(c) a coder (22, 24) for incorporating a coded representation of the encryption of the second signal onto a label to be affixed to the document as a printed code.

5. An apparatus according to claim 4, further comprising means (16) to derive said second signal as a compressed form of said first signal.

6. A method of producing and authenticating a secure document comprising the steps of:
a) scanning said document to produce a first signal representative of an image of at least a portion of said document;
b) encrypting a second signal, comprising a representation of said image, said second signal being derived at least in part from said first signal;
c) incorporating a coded representation of said encrypted second signal into a label as a printed code and affixing the label to said document;
d) reading said coded representation of said second signal from said document;
e) decoding said second signal;
f) decrypting said decoded second signal;
g) inputting said decrypted second signal to a display to display said representation of said image;
h) comparing said document to said displayed image to authenticate said document.

7. A method as claimed in claim 6 wherein said second signal comprises a compressed form of said first signal.

8. A method as claimed in claim 6 or claim 7 wherein said second signal is encrypted using an encryption key, Eᵢ, for a public key encryption system.

9. A method as claimed in claim 8 wherein a decryption key, Dᵢ, corresponding to said encryption key Eᵢ, is encrypted with a second encryption key E₁, for said public key encryption system.

10. A method as claimed in claim 9 wherein said encrypted decryption key, E₁[Dᵢ], is appended to said encrypted second signal prior to incorporation with said document.

11. A method as claimed in claim 10 wherein decryption of said encrypted second signal comprises the further steps of decrypting said encrypted key, E₁ [Dᵢ] using a decryption key, D₁.

12. A method as claimed in any one of claims 7 to 11 wherein said encrypted second signal is incorporated with said document as a two dimensional barcode.

## Patentansprüche

1. Verfahren zum Erzeugen eines gesicherten Dokuments, enthaltend die Schritte:
a) Abtasten des Dokuments zum Erzeugen eines ersten Signals zum Darstellen eines Bilds des Dokuments;
b) Verschlüsseln eines zweiten Signals mit einer Darstellung des Bilds, derart, dass das zweite Signal mindestens teilweise von dem ersten Signal abgeleitet ist; und
c) Aufnehmen einer codierten Darstellung des verschlüsselten zweiten Signals in einem Kennzeichen, das an dem Dokument als gedruckter Code zu fixieren ist.

2. Verfahren nach Anspruch 1, **dadurch gekennzeichnet, dass** das zweite Signal eine komprimierte Form des ersten Signals enthält.

3. Verfahren nach Anspruch 1 oder 2, **dadurch gekennzeichnet, dass** das zweite Signal unter Verwendung eines Verschlüsselungsschlüssels Eᵢ für ein Verschlüsselungssystem mit öffentlichem Schlüssel verschlüsselt wird.

4. Gerät zum Erzeugen eines gesicherten Dokuments, enthaltend:
(a) einen Scanner (12) zum Abtasten eines Dokuments zum Erzeugen eines ersten Signals zum Darstellen eines Bilds des Dokuments;
(b) einen Verschlüssler (20) zum Erzeugen eines zweiten Signals, das zumindest teilweise von dem ersten Signal abgeleitet ist und eine Darstellung des Bilds enthält: und
(c) einen Codierer (22, 24) zum Aufnehmen einer codierten Darstellung der Verschlüsselung des zweiten Signals auf einem Kennzeichen, das an dem Dokument als gedruckter Code zu fixieren ist.

5. Gerät nach Anspruch 4, **dadurch gekennzeichnet, dass** es ferner eine Vorrichtung (16) zum Ableiten des zweiten Signals als komprimierte Form des ersten Signals enthält.

6. Verfahren zum Erzeugen und Ableiten einer Berechtigung eines gesicherten Dokuments, enthaltend die Schritte:
a) Abtasten des Dokuments zum Erzeugen eines ersten Signals zum Darstellen eines Bilds mindestens eines Teils des Dokuments;
b) Verschlüsseln eines zweiten Signals mit einer Darstellung des Bilds, derart, dass das zweite Signal zumindest teilweise von dem ersten Signal abgeleitet wird;
c) Aufnehmen einer codierten Darstellung des verschlüsselten zweiten Signals in einem Kennzeichen als ein gedruckter Code und Anbringen des Kennzeichens an dem Dokument;
d) Lesen der codierten Darstellung des zweiten Signals von dem Dokument;
e) Decodieren des zweiten Signals;
f) Entschlüsseln des decodierten zweiten Signals;
g) Eingabe des entschlüsselten zweiten Signals bei einer Anzeige zum Anzeigen der Darstellung des Bilds;
h) Vergleichen des Dokuments mit dem angezeigten Bild für eine Berechtigung des Dokuments.

7. Verfahren nach Anspruch 6, **dadurch gekennzeichnet, dass** das zweite Signal eine komprimierte Form des ersten Signals enthält.

8. Verfahren nach Anspruch 6 oder Anspruch 7, **dadurch gekennzeichnet, dass** das zweite Signal unter Verwendung eines Verschlüsselungsschlüssels Eᵢ für ein Verschlüsselungssystem mit öffentlichem Schlüssel verschlüsselt wird.

9. Verfahren nach Anspruch 8, **dadurch gekennzeichnet, dass** ein Entschlüsselungsschlüssel Dᵢ gemäß dem Verschlüsselungsschlüssel Ei mit einem zweiten Verschlüsselungsschlüssel E₁ für das Verschlüsselungssystem mit öffentlichem Schlüssel verschlüsselt wird.

10. Verfahren nach Anspruch 9, **dadurch gekennzeichnet, dass** der verschlüsselte Entschlüsselungsschlüssel E₁[Dᵢ] bei dem verschlüsselten zweiten Signal vor der Aufnahme in das Dokument angefügt wird.

11. Verfahren nach Anspruch 10, **dadurch gekennzeichnet, dass** das Entschlüsseln des verschlüsselten zweiten Signals die weiteren Schritte zum Entschlüsseln des verschlüsselten Schlüssels E₁[Dᵢ] unter Verwendung eines Entschlüsselungsschlüssels D₁ enthält.

12. Verfahren nach einem der Ansprüche 7 bis 11, **dadurch gekennzeichnet, dass** das verschlüsselte zweite Signal in dem Dokument als zweidimensionaler Strichcode enthalten ist.

## Revendications

1. Procédé pour la production d'un document sécurisé comprenant les étapes suivantes :
a) l'analyse par balayage dudit document pour produire un premier signal représentant une image dudit document ;
b) le cryptage d'un second signal comprenant une représentation de ladite image, ledit second signal étant déduit au moins en partie dudit premier signal ; et
c) l'incorporation d'une représentation codée dudit second signal crypté dans une étiquette devant être fixée sur ledit document comme code imprimé.

2. Procédé selon la revendication 1, selon lequel ledit second signal comprend une forme comprimée dudit premier signal.

3. Procédé selon la revendication 1 ou 2, selon lequel ledit second signal est crypté à l'aide d'une clé de cryptage Eᵢ pour un système de cryptage à clé publique.

4. Dispositif pour la production d'un document sécurisé comprenant :
a) un analyseur à balayage (12) pour analyser un document afin de produire un premier signal représentant une image du document ;
b) un moyen de cryptage (20) pour crypter un second signal déduit au moins en partie du premier signal et comprenant une représentation de l'image ; et
c) un codeur (22, 24) pour incorporer une représentation codée du cryptage du second signal sur une étiquette devant être fixée au document comme code imprimé.

5. Dispositif selon la revendication. 4, comprenant, de plus, un moyen (16) pour déduire ledit second signal sous une forme comprimée dudit premier signal.

6. Procédé de production et d'authentification d'un document sécurisé, comprenant les étapes suivantes
a) l'analyse par balayage dudit document pour produire un premier signal représentant une image d'au moins une partie dudit document ;
b) le cryptage d'un second signal comprenant une représentation de ladite image, ledit second signal étant déduit au moins en partie dudit premier signal ;
c) l'incorporation d'une représentation codée dudit second signal crypté dans une étiquette sous la forme d'un code imprimé et la fixation de l'étiquette sur ledit document ;
d) la lecture de ladite représentation codée dudit second signal à partir dudit document ;
e) le décodage dudit second signal ;
f) le décryptage dudit second signal décodé ;
g) l'entrée dudit second signal décrypté sur un affichage afin d'afficher ladite représentation de ladite image ; et
h) la comparaison dudit document avec ladite image affichée afin d'authentifier ledit document.

7. Procédé selon la revendication 6, selon lequel ledit second signal comprend une forme comprimée dudit premier signal.

8. Procédé selon la revendication 6 ou 7, selon lequel ledit second signal est crypté à l'aide d'une clé de cryptage Eᵢ pour un système de cryptage à clé publique.

9. Procédé selon la revendication 8, selon lequel une clé de décryptage Dᵢ correspondant à ladite clé de cryptage Eᵢ est cryptée avec une seconde clé de cryptage Eᵢ pour ledit système de cryptage à clé publique.

10. Procédé selon la revendication 9, selon lequel ladite clé cryptée de décryptage Eᵢ[Dᵢ] est ajoutée audit second signal crypté avant l'incorporation dans ledit document.

11. Procédé selon la revendication 10, selon lequel le décryptage dudit second signal crypté comprend une étape supplémentaire de décryptage de ladite clé cryptée Eᵢ[Dᵢ] à l' aide d'une clé de décryptage D₁.

12. Procédé selon l'une quelconque des revendications 7 à 11, selon lequel ledit second signal crypté est incorporé audit document sous la forme d'un code à barres à deux dimensions.
